# EUROPEAN PATENT APPLICATION

(11) **EP 4 838 628 A1**
(43) Date of publication of application: **11.11.2026**
(21) Application number: 26167644.9
(22) Date of filing: 25.03.2026
(51) Int. Cl.: H01M 10/6551, H01M 10/613, H01M 10/643, H01M 10/647, H01M 50/15, H01M 50/152, H01M 50/162, H01M 50/164

(54) **RECHARGEABLE BATTERY**

(30) Priority: 07.05.2025 KR 20250059303
(71) Applicant: SAMSUNG SDI CO., LTD., Yongin-si, Gyeonggi-do 17084 (KR)
(72) Inventor: KO, Jina, 17084 Yongin-si (KR)
(74) Representative: Maiwald GmbH

(57) **Abstract**

A rechargeable battery (100) includes a case (110) having an internal space, an electrode assembly (101) in the internal space of the case, a terminal portion at a terminal side of the case, the terminal portion being electrically connected to the electrode assembly, and being electrically insulated from the case, and a heat dissipation coating portion (125) on the terminal side of the case, the heat dissipation coating portion being adjacent to the terminal portion, and the heat dissipation coating portion including a single-walled carbon nanotube, an epoxy resin, and a metal oxide.

## Description

### BACKGROUND

### 1. Field

The present disclosure relates to a rechargeable battery.

### 2. Description of the Related Art

Unlike a primary battery that cannot be (re)charged, a rechargeable battery may be (re)charged and discharged. A small sized rechargeable battery may be used in a portable small electronic device such as a mobile phone, a laptop computer, and a camcorder, and a mid to large sized rechargeable battery may be used as a power source for driving a motor of an electric scooter, a hybrid vehicle, and an electric vehicle.

The mid to large sized rechargeable battery may generate a large amount of heat during charging and discharging. Thermal accumulation occurs due to heat generated during the charging and discharging process, and as a result, degradation of the rechargeable battery may occur. For example, in some cases, firing or explosion of the rechargeable battery may occur. Accordingly, efforts to improve the heat dissipation performance of the rechargeable battery are continuing.

The above-described information disclosed in the background technology of this disclosure is only intended to enhance the understanding of the background of the present disclosure and therefore may include information that does not constitute prior art.

### SUMMARY

The rechargeable battery according to an embodiment includes a case having an internal space; an electrode assembly positioned in the internal space; a terminal portion positioned on a terminal side of the case, electrically connected to the electrode assembly, and electrically insulated from the case; and a heat dissipation coating portion positioned on the terminal side of the case adjacent to the terminal portion, wherein, the heat dissipation coating portion includes a single-walled carbon nanotube, an epoxy resin, and a metal oxide.

Based on a total weight of the heat dissipation coating portion, the content of the single-walled carbon nanotube in the heat dissipation coating portion may be 30 wt% or more and 60 wt% or less.

Based on a total weight of the heat dissipation coating portion, the content of the metal oxide in the heat dissipation coating portion may be 40 wt% or less.

Based on a total weight of the heat dissipation coating portion, the content of the epoxy resin in the heat dissipation coating portion may be 20 wt% or more and less than 50 wt%.

Based on a total weight of the heat dissipation coating portion, the content of the epoxy resin in the heat dissipation coating portion may be 20 wt% or more and 30 wt% or less.

Based on a total weight of the heat dissipation coating portion, the content of the metal oxide in the heat dissipation coating portion may be 10 wt% or more and 40 wt% or less.

The metal oxide may include magnesium oxide.

The thermal conductivity of the heat dissipation coating portion may be 1.69 W/mK or more and less than 16 W/mK.

The rechargeable battery may be prismatic.

The terminal portion may include a positive electrode terminal and a negative electrode terminal installed on a cap plate arranged on the terminal side of the case, and the heat dissipation coating portion may be coated on a surface of the cap plate facing away from the electrode assembly.

The rechargeable battery may be cylindrical.

The terminal portion may include a terminal installed in a terminal hole provided on the terminal side of the case, and the heat dissipation coating portion may be coated on one surface of the case on the terminal side.

The diameter of the case may be 46 mm.

The terminal portion may include a cap-up arranged on the terminal side of the case, the cap-up includes a protrusion portion, and a peripheral portion arranged along the periphery of the protrusion portion, and the heat dissipation coating portion may be coated along the peripheral portion.

The diameter of the case may be 18mm or 21mm.

### BRIEF DESCRIPTION OF THE DRAWINGS

Features will become apparent to those of skill in the art by describing in detail exemplary embodiments with reference to the attached drawings, in which:
FIG. 1 is a perspective view schematically illustrating a rechargeable battery according to an embodiment of the present disclosure.
FIG. 2 is a cross sectional view taken along line II-II of FIG. 1.
FIG. 3 and FIG. 4 are perspective views schematically illustrating a rechargeable battery according to other embodiments of the present disclosure, respectively.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

In order to clearly describe the present description, parts unrelated to the description may be omitted. In addition, when an element is "above" or "on" another element, it mean that it is positioned above or below the other element and does not necessarily mean that it is positioned "above" or "on" in the opposite direction of gravity.

In addition, when a part "comprises" a component, this means that it may contain more components, rather than excluding other components unless specifically opposed. In addition, throughout the specification, when referred to as "plane", this means when the target part is viewed from above, and when referred to as "cross-section", this means when the cross-section cut vertically is viewed from the side.

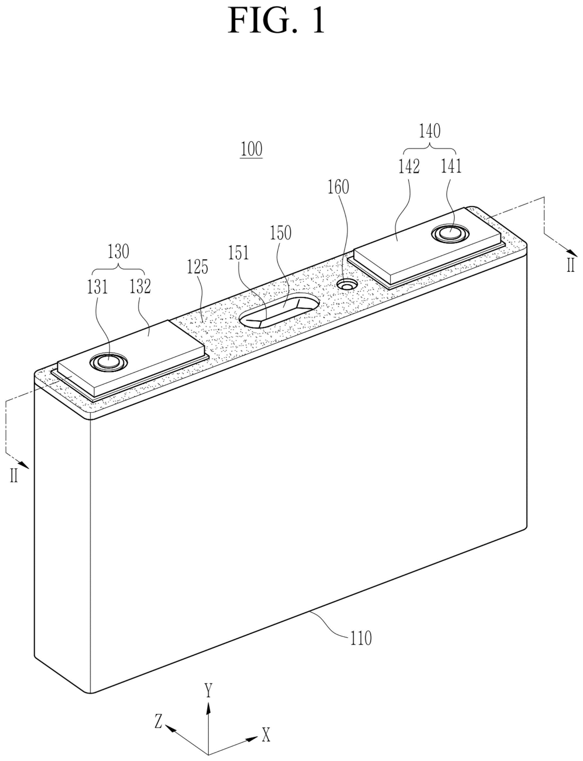

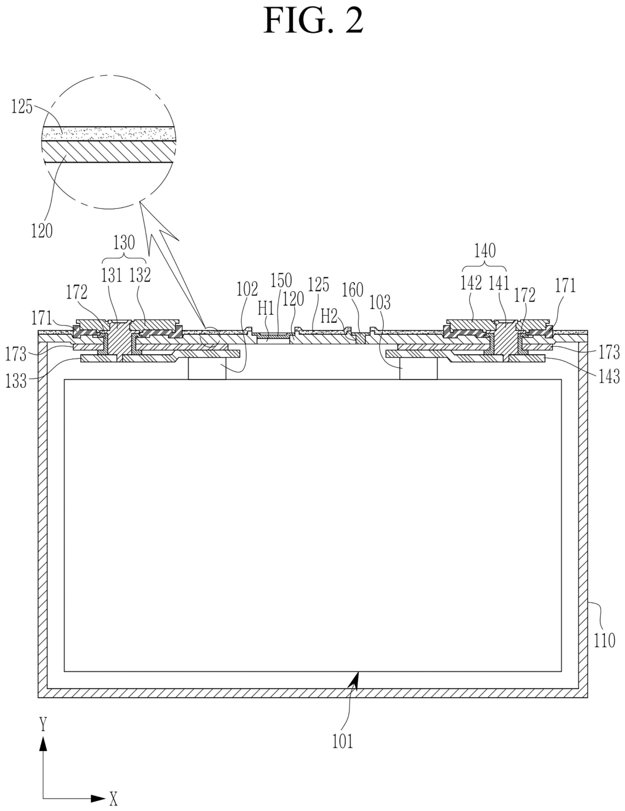

FIG. 1 is a perspective view schematically illustrating a rechargeable battery according to an embodiment of the present disclosure. FIG. 2 is a g a cross sectional view taken along line II-II of FIG. 1.

Referring to FIGS. 1 and 2, a rechargeable battery 100 may include an electrode assembly 101, a case 110 having an internal space in which the electrode assembly 101 and an electrolyte are accommodated, and a cap plate 120 coupled to an opening of the case 110 to seal the case 110.

The electrolyte may include a non-aqueous organic solvent and a lithium salt. A non-aqueous organic solvent serves as a medium through which ions involved in the electrochemical reactions of the battery may move. The non-aqueous organic solvent may be a carbonate solvent, an ester solvent, an ether solvent, a ketone solvent, an alcohol solvent, an aprotic solvent, or a combination thereof, and may be used alone or in combination of two or more. Also, if a carbonate solvent is used, a mixture of a cyclic carbonate and a chain carbonate may be used.

The electrode assembly 101 may be formed, for example, by winding or stacking a laminate including a negative electrode plate, a separator, and a positive electrode plate formed in a thin plate shape or film shape. When the electrode assembly 101 is a wound laminate, the winding axis may be parallel to the longitudinal direction y of the case.

In another example, the electrode assembly 101 may be a stack type rather than a winding type. In yet another example, the electrode assembly 101 may be a Z stack electrode assembly, in which a positive electrode plate and a negative electrode plate are inserted on both sides of a separator that is folded in a Z-stack configuration. In addition, the electrode assembly 101 may be accommodated inside the case 110 by stacking one or more electrode assemblies adjacent to each other on long sides.

The negative electrode plate may include a negative electrode current collecting plate and a negative electrode active material layer positioned on the negative electrode current collecting plate. Additionally, the negative electrode plate may include a negative electrode tab 103, which is an area where the negative electrode active material layer is not positioned. In some embodiments, the negative electrode tab 103 may be formed by cutting it in advance to protrude to one side when manufacturing the negative electrode plate, and may protrude further to one side than the separator without separate cutting.

The negative electrode active material layer may include a negative electrode active material and may further include a binder and/or a conductive material. The negative electrode active material layer may include 90 wt% to 99 wt% with respect to 100 wt% of the negative electrode active material, 0.5 wt% to 5 wt% of the binder with respect to 100 wt% of the negative electrode active material, and 0.5 wt% to 5 wt% of the conductive material with respect to 100 wt% of the negative electrode active material.

The negative electrode active material may include a material capable of reversibly intercalation/deintercalation lithium ions, lithium metal, an alloy of lithium metal, a material capable of doping and dedoping lithium, or a transition metal oxide.

The material capable of reversibly intercalating/deintercalating the lithium ions may be a carbon negative electrode active material, e.g., crystalline carbon, amorphous carbon, or a combination thereof. Examples of the crystalline carbon may include graphite such as natural graphite or artificial graphite, and examples of the amorphous carbon may include soft carbon or hard carbon, mesophase pitch carbide, calcined coke, and the like.

As a material capable of doping and dedoping the lithium, a Si negative electrode active material or a Sn negative electrode active material may be used. The Si negative electrode active material may be silicon, a silicon-carbon composite, SiOx (0 < x < 2), a Si alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles.

The silicon-carbon composite may further include crystalline carbon. For example, the silicon-carbon composite may include a core including crystalline carbon and silicon particles, and an amorphous carbon coating layer positioned on the surface of the core.

The binder may be a non-aqueous binder, an aqueous binder, a dry binder, or a combination thereof. When using an aqueous binder as a binder, it may further include a cellulose compound capable of imparting viscosity.

The above-mentioned conductive material may include carbon materials such as natural graphite, artificial graphite, carbon black, acetylene black, Ketjen black, carbon fibers, carbon nanofibers, and carbon nanotubes; metal materials including copper, nickel, aluminum, and silver in the form of metal powder or metal fiber; conductive polymers such as polyphenylene derivatives; or mixtures thereof.

The negative electrode current collecting plate may be selected from copper foil, nickel foil, stainless steel foil, titanium foil, nickel foam, copper foam, a polymer substrate coated with a conductive metal, and combinations thereof.

The positive electrode plate may include a positive electrode current collecting plate and a positive electrode active material layer positioned on the positive electrode current collecting plate. Additionally, the positive electrode plate may include a positive electrode tab 102, which is an area where the positive electrode active material layer is not present. In some embodiments, the positive electrode tab 102 may be formed by cutting it in advance to protrude to the other side when manufacturing the positive electrode plate, and may protrude further to the other side than the separator without separate cutting.

The positive electrode active material layer may include a positive electrode active material and may further include a binder and/or a conductive material. The content of the positive electrode active material may be 90 wt% to 99 wt% with respect to 100 wt% of the positive electrode active material layer, and the contents of the binder and the conductive material may be 0.5 wt% to 5 wt%, respectively, with respect to 100 wt% of the positive electrode active material layer.

As a positive electrode active material, a compound (lithiated intercalation compound) capable of reversible intercalating and deintercalating of lithium may be used. Specifically, at least one complex oxide of lithium and a metal selected from cobalt, manganese, nickel, and combinations thereof may be used.

The above complex oxide may be a lithium transition metal complex oxide, and specific examples thereof include lithium nickel oxide, lithium cobalt oxide, lithium manganese oxide, lithium iron phosphate compound, cobalt-free nickel-manganese oxide, or a combination thereof.

As an example, a compound represented by any one of the following chemical formulas may be used. LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); LiₐNi_{1-b-c}Mn_{b}X_{c}O_{2-α}D'_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the chemical formula, A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L1 may be Mn, Al, or a combination thereof.

As the binder, a non-aqueous binder, an aqueous binder, a dry binder, or a combination thereof may be used. When using an aqueous binder as a binder, it may further include a cellulose compound capable of imparting viscosity.

The above-mentioned conductive material may include carbon materials such as natural graphite, artificial graphite, carbon black, acetylene black, Ketjen black, carbon fibers, carbon nanofibers, and carbon nanotubes; metal materials including copper, nickel, aluminum, and silver in the form of metal powder or metal fiber; conductive polymers such as polyphenylene derivatives; or mixtures thereof.

Al may be used as the positive electrode current collecting plate.

In this embodiment, the negative electrode tab 103 and the positive electrode tab 102 may be positioned on one side (e.g., on a same side) of the electrode assembly 101 in the same direction. In some embodiments, the negative electrode tab 103 may be positioned on the left side of the electrode assembly 101, and the positive electrode tab 102 may be positioned on the right side of the electrode assembly 101. Here, the left and right sides are for convenience of explanation based on the rechargeable battery illustrated in FIG. 1, and their positions may change when the rechargeable battery rotates left and right or up and down.

The separator may include a porous substrate and a coating layer including an organic material, an inorganic material, or a combination thereof, positioned on one or both surfaces of the porous substrate.

The porous substrate may be a polymer film formed of any one polymer selected from among polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof.

The organic material and inorganic material may be mixed in one coating layer or may be present in a form in which a coating layer including an organic material and a coating layer including an inorganic material are stacked.

The case 110 may include an internal space and a terminal side where the terminal of the rechargeable battery 100 is positioned, and together with the cap plate 120, forms the outer shape of the rechargeable battery 100. The cap plate 120 may be positioned on the terminal side of the case 110. An electrode assembly 101 and an electrolyte may be accommodated in the internal space of the case 110. In this embodiment, the case 110 has an approximate rectangular shape, and the rechargeable battery 100 of this embodiment may be a prismatic rechargeable battery. However, the case 110 may be configured in a pouch type shape. In addition, the case 110 may be made of metal such as aluminum, aluminum alloy, nickel-plated steel, or a laminate film or plastic constituting a pouch.

A terminal portion and a safety vent 150 may be installed on the cap plate 120. The terminal portion may include a positive electrode terminal 130 and a negative electrode terminal 140 electrically insulated from the case 110.

The positive electrode terminal 130 may include a first pillar 131 and a first terminal plate 132, and the positive electrode tab 102 may be fixed to a first connecting portion 133 connected to the first pillar 131. The negative electrode terminal 140 may include a second pillar 141 and a second terminal plate 142, and the negative electrode tab 103 may be fixed to a second connecting portion 143 connected to the second pillar 141.

Each of the positive electrode terminal 130 and the negative electrode terminal 140 may be insulated from the cap plate 120 by an upper insulator 171, a seal gasket 172, and a lower insulator 173. The seal gasket 172 may prevent external moisture from penetrating inside the case 110 and electrolyte inside the case 110 from leaking to the outside.

A vent hole H1 and an electrolyte injection hole H2 may be positioned in the cap plate 120. The safety vent 150 may be installed in the vent hole H1. The safety vent 150 may be a metal plate having a thickness smaller than a thickness of the cap plate 120, and may include a notch 151 that is broken at a predetermined pressure to release internal pressure of the case 110. The stopper 160 may seal the electrolyte injection hole H2 provided in the cap plate 120.

The rechargeable battery 100 according to the present embodiment may include a heat dissipation coating portion 125 positioned on the cap plate 120 (e.g., the cap plate 120 may be between the heat dissipation coating portion 125 and an interior of the case 110). The heat dissipation coating portion 125 may be positioned on the cap plate 120 in an area adjacent to the terminal portion, and may be positioned in an area where the positive electrode terminal 130, the negative electrode terminal 140, the safety vent 150, and the vent hole H1 are not positioned in the cap plate 120. For example, referring to FIGS. 1 and 2, the heat dissipation coating portion 125 may be directly on an upper surface of the cap plate 120 that faces an exterior of the case 110. For example, referring to FIGS. 1 and 2, the heat dissipation coating portion 125 may be continuous on an upper surface of the cap plate 120, while surrounding (e.g., not overlapping vertically) each of the positive electrode terminal 130, the negative electrode terminal 140, the safety vent 150, and the vent hole H1. For example, referring to FIG. 2, the heat dissipation coating portion 125 may be in direct contact with the upper insulator 171 connected to each of the positive and negative electrode terminals 130 and 140, and may surround an entire perimeter of each of the positive and negative electrode terminals 130 and 140, as viewed in a top view.

The heat dissipation coating portion 125 may include a heat dissipation material. The heat dissipation material may include single-walled carbon nanotubes (SWCNT), epoxy resin, and metal oxide. Single-walled carbon nanotubes and metal oxides have excellent thermal conductivity and improve the heat dissipation performance of the heat dissipation coating portion 125, and the epoxy resin acts as an adhesive. The metal oxide may include magnesium oxide (MgO).

The heat dissipation coating portion 125 according to the present embodiment may include 30 wt% or more and 60 wt% or less of single-walled carbon nanotubes, 20 wt% or more and less than 50 wt% of epoxy resin, and 3 wt% or more and 40 wt% or less of metal oxide, based on the total weight of the heat dissipation coating portion 125. For example, the heat dissipation coating portion 125 may include 30 wt% or more and 60 wt% or less of single-walled carbon nanotubes, 20 wt% or more and 30 wt% or less of epoxy resin, and 10 wt% or more and 40 wt% or less of metal oxide based on the total weight of the heat dissipation coating portion 125. In this way, as the heat dissipation coating portion 125 including single-walled carbon nanotubes, epoxy resin, and metal oxide is positioned on the cap plate 120, the heat dissipation performance of the rechargeable battery 100 may be improved.

Hereinafter, the heat dissipation performance of the heat dissipation coating portion according to the present embodiment will be described with reference to Table 1. Table 1 is a table showing the thermal conductivity of the heat dissipation coating portion according to the content of the material included in the heat dissipation coating portion.

In Table 1, MWCNT means a Multi-Walled Carbon Nanotube. Magnesium oxide (MgO) is used as metal oxide. The thermal conductivity values of the heat dissipation coating portion were obtained through simulations based on the Differential Effective Medium Model (DEMM). Here, the thermal conductivity of SWCNTs is 6000 W/mK, the thermal conductivity of MWCNTs is 3000 W/mK, the thermal conductivity of MgO is 30 W/mK, and the thermal conductivity of epoxy resin is 0.2 W/mK.

The heat dissipation coating portion according to an embodiment 1 includes 50 wt% of single-walled carbon nanotubes, 20 wt% of epoxy resin, and 30 wt% of magnesium oxide. The heat dissipation coating portion according to an embodiment 2 includes 60 wt% of the single-walled carbon nanotubes, 30 wt% of the epoxy resin, and 10 wt% of the magnesium oxide. The heat dissipation coating portion according to embodiment 3 includes 30 wt% of the single-walled carbon nanotubes, 30 wt% of the epoxy resin, and 40 wt% of the magnesium oxide. The heat dissipation coating portion according to an embodiment 4 includes 48 wt% of a single-walled carbon nanotube, 49 wt% of an epoxy resin, and 3 wt% of magnesium oxide.

The heat dissipation coating portion according to a comparative example 1 includes 40 wt% of multi-walled carbon nanotubes, 50 wt% of an epoxy resin, and 10 wt% of magnesium oxide. The heat dissipation coating portion according to a comparative example 2 includes 50 wt% of single-walled carbon nanotubes and 50 wt% of epoxy resin. The heat dissipation coating portion according to a comparative example 3 contains 40 wt% of single-walled carbon nanotubes, 50 wt% of epoxy resin, and 10 wt% of magnesium oxide. The heat dissipation coating portion according to a comparative example 4 contains 20 wt% of single-walled carbon nanotubes, 50 wt% of epoxy resin, and 30 wt% of magnesium oxide. The heat dissipation coating portion according to a comparative example 5 includes 30 wt% of single-walled carbon nanotubes, 60 wt% of epoxy resin, and 10 wt% of magnesium oxide.

A thermal conductivity of the heat dissipation coating portion according to the present disclosure may be 1.69 W/mk or more and less than 16 W/mk. Specifically, referring to Table 1, as a result of the DEMM simulation, the thermal conductivity of the heat dissipation coating portions according to embodiments 1, 2, 3, and 4 is measured 15.79 W/mK, 6.80 W/mK, 5.89 W/mK, and 1.69 W/mK, respectively, and the thermal conductivity of the heat dissipation coating portions according to comparative examples 1, 2, 3, 4, and 5 is measured 1.57 W/mK, 1.60 W/mK, 1.60 W/mK, 1.40 W/mK, and 0.91 W/mK, respectively. Accordingly, it may be seen that the thermal conductivity of the heat dissipation coating portion according to embodiments 1, 2, 3, and 4 is greater than the thermal conductivity of the heat dissipation coating portion according to comparative examples 1, 2, 3, 4, and 5. That is, it may be seen that the heat dissipation coating portions according to embodiments 1, 2, 3, and 4 have improved heat dissipation performance compared to the heat dissipation coating portions according to comparative examples 1, 2, 3, 4, and 5.

In addition, the heat dissipation coating portion according to comparative examples 1, 2, 3, 4, and 5 includes more than 50 wt% of an epoxy resin based on the total weight of the heat dissipation coating portion. On the other hand, the heat dissipation coating portion according to embodiments 1, 2, 3, and 4 includes less than 50 wt% of an epoxy resin based on the total weight of the heat dissipation coating portion. That is, it may be seen that thermal conductivity is improved in the case of the heat dissipation coating portion in which less than 50 wt% of an epoxy resin is included in the total weight of the heat dissipation coating portion. For example, when the heat dissipation coating portion includes 30 wt% or less of epoxy resin (heat dissipation coating portions of embodiments 1, 2, and 3) based on the total weight of the heat dissipation coating portion, thermal conductivity is significantly improved.

[Table 1] Thermal conductivity of the heat dissipation coating portion according to the content of the material included in the heat dissipation coating portion

| | Heat Dissipation Coating Portion | | | | Thermal Conductivity (W/mK) |
|---|---|---|---|---|---|
| | SWCNT (wt%) | MWCNT (wt%) | Epoxy Resin (wt%) | MgO (wt%) | |
| Embodiment 1 | 50 | - | 20 | 30 | 15.79 |
| Embodiment 2 | 60 | - | 30 | 10 | 6.80 |
| Embodiment 3 | 30 | - | 30 | 40 | 5.89 |
| Embodiment 4 | 48 | - | 49 | 3 | 1.69 |
| Comparative Example 1 | - | 40 | 50 | 10 | 1.57 |
| Comparative Example 2 | 50 | - | 50 | - | 1.60 |
| Comparative Example 3 | 40 | - | 50 | 10 | 1.60 |
| Comparative Example 4 | 20 | - | 50 | 30 | 1.40 |
| Comparative Example 5 | 30 | - | 60 | 10 | 0.91 |

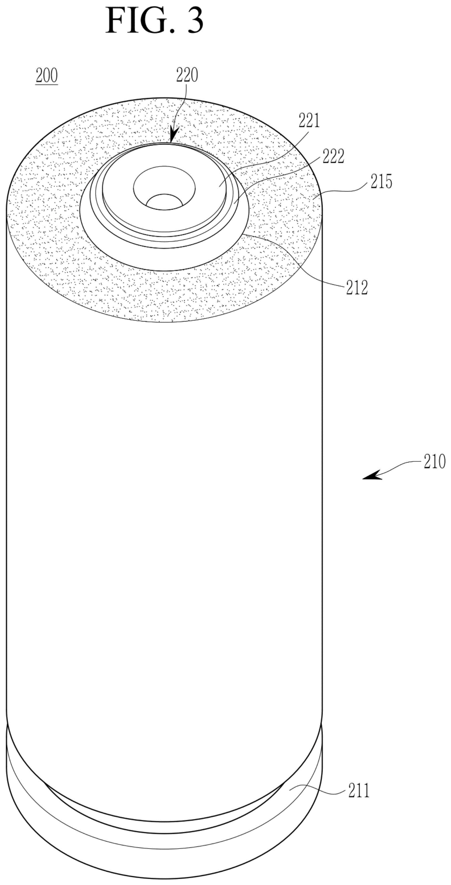

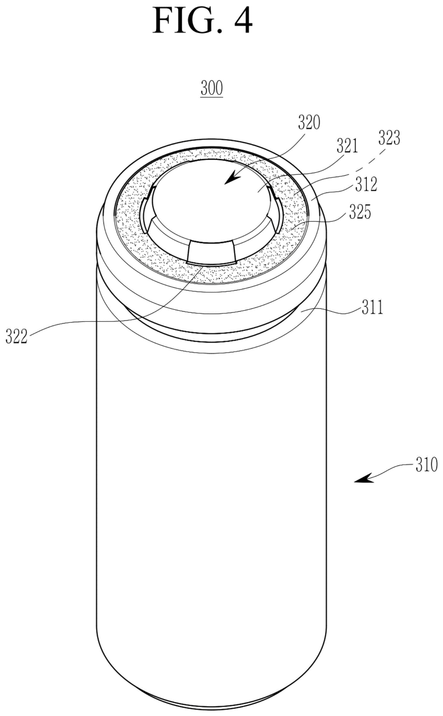

FIG. 3 and FIG. 4 are perspective views schematically illustrating a rechargeable battery according to another embodiment of the present disclosure, respectively.

Referring to FIG. 3, the rechargeable battery 200 according to the present embodiment may include a case 210, a terminal portion 220 and a heat dissipation coating portion 215 positioned at the terminal side of the case 210.

The case 210 may have a cylindrical shape and may have an internal space. An electrode assembly may be accommodated in the internal space of the case 210. A beading portion 211 may be positioned on the side surface of the case 210. The beading portion 211 may be a portion concavely deformed toward the inside of the case 210. A cap assembly may be positioned on the other side of the case 210 facing the terminal portion 220, and the edge of the cap assembly may be fixed by the beading portion 211.

A terminal hole 212 may be positioned at the terminal side of the case 210, and a terminal portion 220 may be positioned in the terminal hole 212 and is a portion that protrudes upward from the terminal side of the case 210. The heat dissipation coating portion 215 may be coated on one surface of the case 210 on the terminal side of the case 210.

The terminal portion 220 is a portion that comes into contact with an external circuit, and the heat dissipation coating portion 215 is adjacent to the terminal portion 220 and is an area that does not come into contact with an external circuit. In here, the heat dissipation coating portion 215 according to the present embodiment is the same as a configuration of the heat dissipation coating portion 125 of the rechargeable battery according to the embodiment of FIG. 1. Accordingly, the description of the heat dissipation coating portion 215 according to the present embodiment will be omitted.

The terminal portion 220 may include a terminal 221 and an insulator 222, and the insulator 222 may be positioned between the terminal 221 and the case 210 to insulate the terminal 221 and the case 210. The terminal portion 220 may be connected to a positive electrode of the electrode assembly to function as a positive electrode terminal, and the case 210 may be connected to a negative electrode of the electrode assembly to function as an negative electrode terminal.

The rechargeable battery 200 according to the present embodiment is a cylindrical rechargeable battery, and may be divided according to the diameter and height of the case 210. For example, the rechargeable battery 200 according to the present embodiment may be a 4680 rechargeable battery (diameter 46 mm, height 80 mm), a 4695 rechargeable battery (diameter 46 mm, height 95 mm), a 46100 rechargeable battery (diameter 46 mm, height 100 mm), or a 46120 rechargeable battery (diameter 46 mm, height 120 mm).

Referring to FIG. 4, the rechargeable battery 300 according to the present embodiment includes a case 310 having an internal space, and a cap assembly 320 coupled to an opening positioned at a terminal side of the case 310 to seal the case 310.

The case 310 has a cylindrical shape, and an electrode assembly may be accommodated in the internal space. The case 310 may include a beading portion 311 which is a part concavely deformed toward the inside of the case 310 and a crimping portion 312 bent toward the inside of the case 310 at an opening-side end. The beading portion 311 and the crimping portion 312 may firmly fix the cap assembly 320.

The cap assembly 320 may include a terminal portion and a heat dissipation coating portion 325.

The terminal portion may contact an external circuit and include a protrusion portion 321 protruding upward from the terminal side of the case 310 and a peripheral portion 323 arranged along the periphery of the protrusion portion 321. Here, the protrusion portion 321 and the peripheral portion 323 may be a cap-up. The peripheral portion 323 is an area where the external circuit does not come into contact, and a heat dissipation coating portion 325 may be coated along the peripheral portion 323. In here, the heat dissipation coating portion 325 according to the present embodiment is identical to the configuration of the heat dissipation coating portion 125 of the rechargeable battery according to the embodiment of FIG. 1. Accordingly, the description of the heat dissipation coating portion 325 according to the present embodiment will be omitted. Additionally, the terminal portion may have a gas discharge port 322 positioned around the protrusion portion 321 for discharging gas.

The protrusion portion 321 may be connected to the positive electrode of the electrode assembly and function as a positive electrode terminal, and the case 310 may be connected to the negative electrode of the electrode assembly and function as a negative electrode terminal.

The rechargeable battery 300 according to the present embodiment is a cylindrical rechargeable battery and may be classified according to the diameter and height of the case 310. For example, the rechargeable battery 300 according to the present embodiment may be an 1865 rechargeable battery (diameter 18 mm, height 65 mm) or a 2170 rechargeable battery (diameter 21 mm, height 70 mm).

By way of summation and review, the present disclosure provides a rechargeable battery with improved heat dissipation performance. That is, according to embodiments of the present disclosure, a heat dissipation coating portion is formed with a heat dissipation material at the terminal side of a case, thereby improving heat dissipation performance of a rechargeable battery.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A rechargeable battery, comprising:
a case having an internal space;
an electrode assembly in the internal space of the case;
a terminal portion at a terminal side of the case, the terminal portion being electrically connected to the electrode assembly, and being electrically insulated from the case; and
a heat dissipation coating portion on the terminal side of the case, the heat dissipation coating portion being adjacent to the terminal portion, and the heat dissipation coating portion comprising a single-walled carbon nanotube, an epoxy resin, and a metal oxide.

2. The rechargeable battery as claimed in claim 1, wherein based on a total weight of the heat dissipation coating portion, a content of the single-walled carbon nanotube in the heat dissipation coating portion is 30 wt% or more and 60 wt% or less.

3. The rechargeable battery as claimed in claim 1 or claim 2, wherein based on a total weight of the heat dissipation coating portion, a content of the metal oxide in the heat dissipation coating portion is 40 wt% or less.

4. The rechargeable battery as claimed in any one of claims 1-3, wherein based on a total weight of the heat dissipation coating portion, a content of the epoxy resin in the heat dissipation coating portion is 20 wt% or more and less than 50 wt%.

5. The rechargeable battery as claimed in any one of claims 1-3, wherein based on a total weight of the heat dissipation coating portion, a content of the epoxy resin in the heat dissipation coating portion is 20 wt% or more and 30 wt% or less.

6. The rechargeable battery as claimed in any one of claims 1-3, wherein the content of the metal oxide in the total weight of the heat dissipation coating portion is 10 wt% or more and 40 wt% or less.

7. The rechargeable battery as claimed in any one of claims 1-6, wherein the metal oxide comprises a magnesium oxide.

8. The rechargeable battery as claimed in any one of claims 1-7, wherein a thermal conductivity of the heat dissipation coating portion is 1.69 W/mK or more and less than 16 W/mK.

9. The rechargeable battery as claimed in any one of claims 1-8, wherein the rechargeable battery is a prismatic rechargeable battery.

10. The rechargeable battery as claimed in any one of claims 1-9, wherein:
the terminal portion comprises a positive electrode terminal and a negative electrode terminal on a cap plate arranged on the terminal side of the case, and
the heat dissipation coating portion is on a surface of the cap plate facing away from the electrode assembly.

11. The rechargeable battery as claimed in any one of claims 1-8, wherein the rechargeable battery is a cylindrical rechargeable battery.

12. The rechargeable battery as claimed in any one of claims 1-8 and 11, wherein:
the terminal portion comprises a terminal in a terminal hole, the terminal hole being on the terminal side of the case, and
the heat dissipation coating portion is on one surface of the case on the terminal side.

13. The rechargeable battery as claimed in claim 11 or claim 12, wherein a diameter of the case is 46 mm.

14. The rechargeable battery as claimed in claim 11, wherein:
the terminal portion comprises a cap-up on the terminal side of the case, the cap-up comprising a protrusion portion and a peripheral portion along a periphery of the protrusion portion, and
the heat dissipation coating portion is along the peripheral portion.

15. The rechargeable battery as claimed in claim 11, claim 12 or claim 14, wherein a diameter of the case is 18 mm or 21 mm.
